# EUROPEAN PATENT SPECIFICATION

(11) **EP 2 252 656 B1**
(45) Date of publication and mention of the grant of the patent: **16.08.2017**
(21) Application number: 09720387.1
(22) Date of filing: 06.03.2009
(51) Int. Cl.: C08K 5/00, C08L 75/06, C08L 67/02

(54) **BIODEGRADABLE ELASTOMERIC COMPOUND**
BIOLOGISCH ABBAUBARE ELASTOMER-VERBINDUNG
COMPOSÉ ÉLASTOMÈRE BIODÉGRADABLE

(30) Priority: 11.03.2008 IT PD20080079
(43) Date of publication of application: 24.11.2010
(73) Proprietor: A.P.I. Applicazioni Plastiche Industriali S.P.A., 36065 Mussolente VI (IT)
(72) Inventor: BRUNETTI, Sergio, I-36061 Bassano Del Grappa (IT)
(74) Representative: Modiano, Micaela Nadia
(86) International application number: PCT/EP2009/052686
(87) International publication number: WO 2009/112438

(56) References cited:
- WO-A-02/14431
- WO-A-96/39885
- WO-A1-99/61526
- US-A- 6 100 328
- US-A1- 2006 246 307
- DATABASE WPI Week 200406 Thomson Scientific, London, GB; AN 2004-056172 XP002531269 & JP 2003 274800 A (DAISEE KOGYO) 30 September 2003 (2003-09-30)

## Description

### Technical Field

The present invention relates to an elastomeric and biodegradable polymeric composition used in the field of the production of shoes, sports articles, and technical articles that are molded, overmolded or extruded.

### Background Art

In recent years, plastic materials have progressively acquired importance on the world market and currently are a fundamental part of everyday life, so much that currently it is possible to speak rightfully of "age of plastics".

However, while on the one hand plastics have allowed to achieve enormous advantages, on the other hand the abuse of this material has brought about an environmental degradation whose impact has repercussions worldwide. In view of this abuse and of its consequences, the plastics industry is active in the research for alternative solutions to the disposal of existing plastic products but also in the development of new materials whose mechanical characteristics are similar to those of known materials and have greater simplicity as regards disposal.

In particular, the study of biodegradable materials constitutes a particularly active and interesting field of research. Biodegradation is a degradation phenomenon caused by biological activity, particularly by enzyme activity, which leads to significant changes in the chemical structure of the material. In the case of plastics, biodegradability must be such as to allow complete breakdown of the material to yield simpler molecules in a specific time. In particular, it is of interest that biodegradable plastics can be subjected efficiently to the composting process, i.e., the conversion of organic material by aerobic decomposition.

Biodegradable plastics are classified into three great categories: biodegradable plastics based on aliphatic polyesters, biodegradable plastics based on polymers of natural origin, and mixtures of these plastics. Plastics based on aliphatic polyesters are derived substantially from petrochemistry, but also from renewable sources such as agricultural processing and microbial synthesis. Plastics based on natural polymers are substantially accumulation products that can be extracted from various organisms and include for example starch and its derivatives, cellulose and cellulose esters, proteins, polysaccharides and polyamino acids.

However, these plastic materials, in contrast with their biodegradability, do not always have the excellent mechanical properties of synthetic plastics and therefore are less versatile or more difficult to process.

There is, therefore, the need to develop new polymeric compositions that offer characteristics of a mechanical type that are similar to those of synthetic materials and at the same time have the high level of biodegradability of aliphatic polyesters or of polymers of natural origin.

### Disclosure of the Invention

The aim of the present invention is to provide a biodegradable polymeric composition that is characterized by mechanical properties that are suitable for use in the field of shoes, sport articles, and technical articles that are molded, overmolded and extruded.

Within this aim, an object of the invention is to provide a polymeric composition that is compliant with UNI standards related to biodegradability and composting (UNI EN 13432, UNI EN 14045, UNI EN 14046).

Another object of the invention is to provide a new biodegradable polymeric material for the preparation of sport shoes and in particular of molded soles.

Another object of the present invention is to provide a process for preparing a biodegradable polymeric composition that can utilize pre-existing compounding technologies.

Another object of the invention is to provide a process for preparing a biodegradable polymeric material that is highly reliable, relatively easy to provide and at competitive costs.

This aim and these and other objects, which will become better apparent hereinafter, are achieved by a biodegradable elastomeric polymeric composition which has a hardness from 50 on the Shore A scale to 65 on the Shore D scale and is characterized in that it comprises:
(a) 15% to 50% by weight of a thermoplastic polyester urethane having a hardness from 50 to 90 on the Shore A scale and constituted by a polyester, an isocyanate and a chain extender, where the ratio between the quantity of polyester and chain extender and the quantity of isocyanate is lower than 8:2, the polyester is a copolymer of a diol selected from the group constituted by butane diol, propane diol, ethylene glycol and mixtures thereof and of an aliphatic organic acid selected from the group constituted by adipic acid, succinic acid, glutaric acid and mixtures thereof, and the chain extender is selected from the group constituted by butane diol, propane diol, ethylene glycol and mixtures thereof;
(b) 35% to 75% by weight of a copolyester having a hardness from 32 to 70 on the Shore D scale, where the copolyester is a copolymer of a diol that is selected from the group constituted by butane diol, propane diol, ethylene glycol and mixtures thereof, of an aliphatic organic acid selected from the group constituted by adipic acid, succinic acid, glutaric acid and mixtures thereof, and of terephthalic acid;
(c) 5% to 40% by weight of a non-phthalic plasticizer;
wherein the hardness on the Shore A scale and the hardness on the Shore D scale are measured according to the ASTM D2240 Method.

The above aim and objects of the present invention are also achieved by a process for preparing the polymeric composition described herein, comprising the steps of:
(a) mixing in the liquid state the polyester urethane, the copolyester and the plasticizer in an extruder, so as to obtain the polymeric composition;
(b) extruding the polymeric composition; and
(c) cooling the extruded polymeric composition.

Moreover, the aim and objects of the invention are also achieved by the use of the polymeric composition described here for the production of sports shoes, ski boots and molded soles, for overmolding on rigid parts and for the production of injection-molded articles and profiles obtained by extrusion.

### Ways of carrying out the Invention

Further characteristics and advantages of the invention will be described in the continuation of the following detailed description.

In one aspect, the present invention relates to a biodegradable elastomeric polymeric composition which has a low hardness measured according to Shore A and Shore D scales. In particular, hardness is comprised between 50 on the Shore A scale and 65 on the Shore D scale. The composition can have a hardness from 50 to 98 on the Shore A scale in its softer and more flexible forms and a hardness from 32 to 65 on the Shore D scale in its harder and more rigid forms.

The polymeric composition described here can be characterized by a Shore A or Shore D hardness value comprised in the intervals previously indicated by utilizing in its preparation materials from whose chemical and physical characteristics the desired final properties are derived.

In particular, it is known that the hardness of a polymeric material is correlated to the chemical structure of such material. In fact, rigid structures such as double and triple bonds between carbon atoms, cyclic rings, but most of all aromatic rings, tend to increase the hardness of the polymeric material that contains them. Accordingly, the increase in aromatic structures in a polymer affects its hardness significantly. Moreover, the presence of aromatic structures also affects the biodegradability of the material and it is observed that the increase in the content of such structures in a material is matched by a reduction in biodegradability.

The polymeric composition according to the invention meets both the need to have available a biodegradable material and the need to have mechanical characteristics (e.g., hardness and elasticity) that are suitable for use in the field of shoes. This is possible by virtue of the combination, in the polymeric composition described here, of three different components, a thermoplastic polyester urethane, a copolyester and a plasticizer.

The first component is a thermoplastic polyester urethane (TPU), which is present in a quantity from 15% to 50% by weight of the composition, preferably 20% to 30%, with a hardness from 50 to 90 on the Shore A scale and constituted by a polyester, an isocyanate and a chain extender, where the ratio between the sum of the quantity of polyester and the quantity of chain extender with respect to the quantity of isocyanate is lower than 8:2. The contribution in terms of rigidity of the material can in fact be ascribed to the isocyanic component of the TPU, and therefore the TPU of the present polymeric composition must have a content of the isocyanic component that is lower than that of the sum of polyester and chain extender.

The polyester that constitutes part of the TPU is a copolymer of a diol selected from the group constituted by butane diol, propane diol, ethylene glycol and mixtures thereof, and of an aliphatic organic acid selected from the group constituted by adipic acid, succinic acid, glutaric acid and mixtures thereof. The aliphatic structure and the presence of ester groups of this copolymer gives the TPU that contains it high flexibility and therefore low hardness and high biodegradability.

The isocyanate can instead be selected among the compounds that contain isocyanate groups normally used in the field of the production of polyurethanes. By way of non-limiting example, the isocyanate can be an aliphatic isocyanate, such as hexamethylene diisocyanate (HDI) or isophorone diisocyanate (IPDI) or an aromatic isocyanate such as methylene diphenyl diisocyanate (MDI).

The chain extender used in the preparation of the polyester urethane is selected from the group constituted by butane diol, propane diol, ethylene glycol and mixtures thereof.

Therefore, on the basis of the choice of isocyanates, polyesters and chain extenders, the resulting TPU can be aliphatic, aromatic or partly aromatic and partly aliphatic.

For example, the thermoplastic polyester urethane can be constituted by a polyester copolymer of butane diol and adipic acid in a quantity equal to 72% by weight of the polyester urethane, butane diol in a quantity equal to 5% by weight of the polyester urethane as a chain extender, and methylene diphenyl diisocyanate (MDI) in a quantity equal to 23% by weight of the polyester urethane as isocyanate. An example of thermoplastic polyester urethane with these characteristics is Apilon 52 B20 produced by Api S.p.A..

The second component of the polymeric composition is a copolyester that is present in the polymeric composition in a quantity from 35% to 75% by weight of the composition, preferably from 40% to 50%. The copolyester is characterized by a hardness from 32 to 70 on the Shore D scale and is a copolymer of:
(i) a diol selected from the group constituted by butane diol, propane diol, ethylene glycol, and mixtures thereof;
(ii) an aliphatic organic acid selected from the group constituted by adipic acid, succinic acid, glutaric acid and mixtures thereof; and
(iii) terephthalic acid.

Preferably, the copolyester comprises terephthalic acid in a quantity from 15% to 35% by weight of the copolyester.

In a preferred embodiment of the present invention, the copolyester is a copolymer of butane diol, adipic acid and terephthalic acid. In another preferred embodiment, the copolyester has a hardness from 32 to 35 on the Shore D scale.

The third component of the polymeric composition is a non-phthalic plasticizer that is present in the polymeric composition in a quantity from 5% to 40% by weight of the composition, preferably 20% to 30%. The expression "non-phthalic plasticizer" is used to reference chemical compounds that in a mixture with plastics are capable of giving greater flexibility to such plastics and do not contain derivatives of phthalic acid (1,2-benzene dicarboxylic acid) in their structure. Plasticizers facilitate the processing of plastic materials because, by making the material more flexible, they allow the use of processing temperatures at which the plastics are not degraded. Further, in the polymeric composition of the present invention, the non-phthalic plasticizer contributes to improve the biodegradability of the material; the degradation of these plasticizers in fact tends to increase the acidity of the surrounding environment, which in turn accelerates the degradation of the polymeric composition.

Preferably, the non-phthalic plasticizers are polyesters with a low molecular weight. In a preferred embodiment, the non-phthalic plasticizer is dipropylene glycol dibenzoate (DPG benzoate).

In another aspect, the present invention relates to a process for preparing the polymeric composition described here. The process consists of compounding by extrusion, during which (a) the thermoplastic polyester urethane, the copolyester and the non-phthalic plasticizer are mixed in the liquid state in an extruder, so as to obtain the polymeric composition; (b) the resulting composition is extruded; (c) the extruded material is cooled.

The temperatures and times of the compounding, as well as the order by means of which the components of the polymeric composition are introduced in the extruder, are within the grasp of the person skilled in the art, who therefore will be able to determine these parameters on the basis of his own experience.

By way of non-limiting example, the extruder can be a co-rotating double-screw (twin-screw) extruder, while the operating parameters for preparing the polymeric composition can provide for the use of a 32-diameter co-rotating twin-screw extruder, of a temperature profile of the cylinder from 130°C to 140°C, a temperature of the extrusion head of around 145°C, a melt temperature around 135°C, a rotation of the screw at approximately 150 rpm and a material flow-rate of approximately 25 kg/hour.

Preferably, in the preparation of the polymeric composition of the present invention, the previously plasticized TPU is mixed dry with the copolyester.

In one embodiment, after the step for cooling the polymeric composition (step c) it is possible to provide the additional step (d) for reducing the composition in the form of pellets.

In another embodiment of the process according to the invention it is possible to provide a step that is preliminary to step (a). This preliminary step seeks to prepare directly "in the screw" the thermoplastic polyester urethane and consists in mixing inside the extruder the polyester and the chain extender with the isocyanate in a ratio lower than 8:2. Optionally, a cross-linking agent can also be mixed. This variation of the process is termed "reactive extrusion".

The polymeric composition described here is used in the field of the production of shoes and ski boots, where the hardness value comprised between 50 Shore A and 65 Shore D and the mechanical properties of the material are particularly advantageous.

Therefore, another aspect of the present invention consists in using the polymeric composition described here to produce sports shoes, ski boots and molded soles. In particular, the polymeric composition whose hardness is comprised between 50 and 98 on the Shore A scale can be used in the production of shoes, the polymeric composition whose hardness is comprised between 30 and 65 on the Shore D scale can instead be used in the production of ski boots.

In one embodiment, the molded soles can be compact or expanded. In another embodiment, the molded soles are provided by means of a molding technique that is selected from the group constituted by injection molding, intrusion molding and a combination thereof.

Another aspect of the present invention also consists in using the composition described here for over molding on rigid parts, particularly to provide overmolded technical articles.

Moreover, another aspect of the present invention consists in using the composition described here to produce injection-molded articles and profiles obtained by extrusion.

### Example

A polymeric composition as described here was provided by mixing in a co-rotating double-screw extruder the following components in the percentages by weight indicated in Table 1.

**Table 1**

| | TPU | Copolyester | Plasticizer |
|---|---|---|---|
| Component | Apilon 52B20 | Copolymer of butane diol, adipic acid and terephthalic acid with a hardness of 32-35 Shore D | DPG dibenzoate |
| Quantity | 30% | 45% | 25% |

The mechanical properties of the resulting polymeric composition, identified as "NAT4 BIS1", were measured according to the test methods indicated in Table 2, obtaining the results listed in Table 2.

**Table 2**

| NAT4 BIS1 | | | |
|---|---|---|---|
| Method | Analysis | Unit | |
| ASTMD792 | Density | g/cm³ | 1.174 |
| ASTM D2240 | Hardness | Shore A | 65 |
| ASTM D624 | Tear strength (without nick) | KN/m | 38 |
| ASTM D638 | Load at 5% elongation | MPa | 0.5 |
| | Load at 10% elongation | MPa | 0.9 |
| | Load at 20% elongation | MPa | 1.4 |
| | Load at 100% elongation | MPa | 2.6 |
| | Load at 300% elongation | MPa | 4 |
| | Breaking strength | MPa | 6.7 |
| | Breaking elongation | % | 700 |
| | Abrasion | mm³ | 130 |

The resulting polymeric composition exhibits a hardness value in the range 50-98 Shore A, a resistance to abrasion equal to a maximum value of 150 mm³ and an elongation of over 400%. These mechanical properties, together with the aesthetic appearance and touch, make the polymeric composition suitable for use in the production of shoes and for overmolding.

In practice it has been found that the polymeric composition according to the invention fully achieves the proposed aim, since the material obtained from the compounding of the specific precursors used is characterized by mechanical properties of hardness, resistance to abrasion and elasticity that are suitable for use in the shoe sector.

Further, it has also been found that the polymeric composition according to the invention is highly biodegradable and can therefore be sent to composting for its disposal.

Further, it has been observed that the process for preparing the polymeric composition described here can be performed easily by using the extrusion systems normally used by the plastics industry.

The disclosures in Italian Patent Application No. PD2008A000079 from which this application claims priority are incorporated herein by reference.

## Claims

1. A biodegradable elastomeric polymeric composition having a hardness from 50 on the Shore A scale to 65 on the Shore D scale and **characterized in that** it comprises:
(a) 15% to 50% by weight of a thermoplastic polyester urethane having a hardness from 50 to 90 on the Shore A scale and constituted by a polyester, an isocyanate and a chain extender, where the ratio between the quantity of polyester and chain extender and the quantity of isocyanate is lower than 8:2, the polyester is a copolymer of a diol selected from the group constituted by butane diol, propane diol, ethylene glycol and mixtures thereof and of an aliphatic organic acid selected from the group constituted by adipic acid, succinic acid, glutaric acid and mixtures thereof, and the chain extender is selected from the group constituted by butane diol, propane diol, ethylene glycol and mixtures thereof;
(b) 35% to 75% by weight of a copolyester having a hardness from 32 to 70 on the Shore D scale, where the copolyester is a copolymer of a diol that is selected from the group constituted by butane diol, propane diol, ethylene glycol and mixtures thereof, of an aliphatic organic acid selected from the group constituted by adipic acid, succinic acid, glutaric acid and mixtures thereof, and of terephthalic acid;
(c) 5% to 40% by weight of a non-phthalic plasticizer;
wherein the hardness on the Shore A scale and the hardness on the Shore D scale are measured according to the ASTM D2240 method.

2. The composition according to claim 1, wherein the thermoplastic polyester urethane is aliphatic, aromatic or aliphatic and aromatic.

3. The composition according to claim 1, wherein the copolyester having a hardness from 32 to 70 on the Shore D scale is a copolymer of butane diol, adipic acid and terephthalic acid.

4. The composition according to claim 1, wherein the copolyester comprises terephthalic acid in a quantity from 15% to 35% by weight of the copolyester.

5. The composition according to claim 1, wherein the copolyester has a hardness from 32 to 35 on the Shore D scale.

6. The composition according to claim 1, wherein the plasticizer is a dipropylene glycol dibenzoate.

7. A process for preparing a polymeric composition according to one or more of claims 1-6, comprising the steps of:
(a) mixing in the liquid state the thermoplastic polyester urethane, the copolyester and the plasticizer in a co-rotating double-screw extruder, so as to obtain the polymeric composition;
(b) extruding the polymeric composition; and
(c) cooling the extruded polymeric composition.

8. The process according to claim 7, further comprising the step of:
(d) reducing the polymeric composition in the form of pellets.

9. The process according to claim 7, further comprising a step that is preliminary to step (a) for preparing the thermoplastic polyester urethane by mixing in the extruder the polyester and the chain extender with the isocyanate in a ratio of less than 8:2 and optionally a cross-linking agent.

10. A use of the polymeric composition according to one or more of claims 1-6 for the production of sports shoes, ski boots and molded soles.

11. The use according to claim 10, wherein the soles are compact or expanded.

12. The use according to claim 10 or 11, wherein the soles are prepared by means of a molding technique that is selected from the group constituted by injection molding, intrusion molding and a combination thereof.

13. The use of the composition according to one or more of claims 1-6 for overmolding on rigid parts.

14. The use of the composition according to one or more of claims 1-6 for the production of injection-molded articles and profiles obtained by extrusion.

## Patentansprüche

1. Eine biologisch abbaubare elastomere Polymerzusammensetzung mit einer Härte von 50 auf der Shore A Skala bis 65 auf der Shore D Skala und **dadurch gekennzeichnet, dass** sie folgendes umfasst;
(a) 15 bis 50 Gewichtsprozent eines thermoplastischen Polyesterurethans mit einer Härte von 50 bis 90 auf der Shore A Skala und gebildet aus einem Polyester, einem Isocyanat und einem Ketten-Extender, worin das Verhältnis zwischen der Menge an Polyester und Ketten-Extender und der Menge an Isocyanat geringer ist als 8:2, der Polyester ist ein Copolymer aus einem Diol gewählt aus der Gruppe gebildet aus Butandiol, Propandiol, Ethylenglykol und Mischungen daraus, und aus einer aliphatischen organischen Säure gewählt aus der Gruppe gebildet aus Adipinsäure, Bernsteinsäure, Glutarsäure und Mischungen daraus, und der Ketten-Extender ist gewählt aus der Gruppe bestehend aus Butandiol, Propandiol, Ethylenglykol und Mischungen daraus;
(b) 35 bis 75 Gewichtsprozent eines Copolyesters mit einer Härte von 32 bis 70 auf der Shore D Skala, worin der Copolyester ein Copolymer aus einem Diol, das gewählt ist aus der Gruppe gebildet aus Butandiol, Propandiol, Ethylenglykol und Mischungen daraus, aus einer aliphatischen organischen Säure gewählt aus der Gruppe gebildet aus Adipinsäure, Bernsteinsäure, Glutarsäure und Mischungen daraus, und aus Terephthalsäure ist;
(c) 5 bis 40 Gewichtsprozent eines Nicht-Phthalsäure-Weichmachers;
worin die Härte auf der Shore A Skala und die Härte auf der Shore D Skala gemaß dem ASTM D2240 Verfahren gemessen werden.

2. Die Zusammensetzung gemäß Anspruch 1, worin das thermoplastische Polyesterurethan aliphatisch, aromatisch oder aliphatisch und aromatisch ist.

3. Die Zusammensetzung gemäß Anspruch 1, worin der Copolyester mit einer Härte von 32 bis 70 auf der Shore D Skala ein Copolymer aus Butandiol, Adipinsäure und Terephthalsäure ist.

4. Die Zusammensetzung gemäß Anspruch 1, worin der Copolyester Terephthalsäure in einer Menge von 15 bis 35 Gewichtsprozent des Copolyesters umfasst.

5. Die Zuaammensetzung gemäß Anspruch 1, worin der Copolyester eine Härte von 32 bis 35 auf der Shore D Skala hat.

6. Die Zusammensetzung gemäß Anspruch 1, worin der Weichmacher ein Dipropylenglykol-dibehzoat ist.

7. Ein Verfahren zur Herstellung einer Polymerzusammensetzung gemäß einem oder mehreren der Ansprüche 1-6, das die folgenden Schritte umfasst;
(a) Mischen im flüssigen Zustand des thermoplastischen Polyesterurethans, des Copolyesters und des Weichmachsers in einem gleichläufigen Doppelschneckenextruder, um die Polymerzusammensetzung zu erhalten;
(b) Extrudieren der Polymerzusammensetzung; und
(c) Kühlen der extrudierten Polymerzusammensetzung.

8. Das Verfahren gemäß Anspruch 7, weiter umfassend folgenden Schritt:
(d) Zerkleinern der Polymerzusammensetzung in die Form von Pellets.

9. Das Verfahren gemäß Anspruch 7, weiter umfassend einen Schritt, der vor Schritt (a) kommt, zur Herstellung des thermoplastischen Polyesterurethans durch Mischen in dem Extruder des Polyesters und des Ketten-Extenders mit dem Isocyanat in einem Verhältnis von weniger als 8:2 und wahlweise eines quervernetzenden Wirkstoffs.

10. Eine Verwendung der Polymerzusammensetzung gemäß einem oder mehreren der Ansprüche 1-6 für die Herstellung von Sportschuhen, Skistiefeln und geformten Sohlen.

11. Die Verwendung gemäß Anspruch 10, worin die Sohlen kompakt oder expandiert sind.

12. Die Verwendung gemäß Anspruch 10 oder 11, worin die Sohlen hergestellt werden mittels einer Formtechnik, die gewählt ist aus der Gruppe gebildet aus Injektionsformung, Intrusionsformung und einer Kombination daraus.

13. Die Verwendung der Zusammensetzung gemäß einem oder mehreren der Ansprüche 1-6 zur Überspritzung auf starre Teile.

14. Die Verwendung der Zusammensetzung gemäß einem oder mehreren der Ansprüche 1-6 für die Produktion von Injektionsgeformten Artikeln und Profilen, die durch Extrusion erhalten werden.

## Revendications

1. Composition polymère élastomère biodégradable d'une dureté allant de 50 sur l'échelle Shore A à 65 sur l'échelle Shore D et **caractérisée par le fait qu'**elle camprend :
(a) de 15 % à 50 % en poids d'un polyosteruréthane thermoplastique ayant une dureté allant de 50 à 90 sur l'échelle Shore A et composé d'un polyester, d'un Isocyanate et d'un allongeur de chaîne, avec un rapport entre la quantité de polyesters et d'allongeur de chaîne et la quantité d'isocyanate intérieur à 8:2, le polyester étant un capolymère de diol choisi dans le groupe composé de butanediol, de propanediol, d'éthylène glycol et de mélanges de ceux-ci et d'un acide organique aliphatique choisi dans le groupe composé par l'acide adipique, l'acide succinique, l'acide glutarique et des mélanges de ceux-ci, et l'allongeur de chaîne est choisi dans le groupe composé de butanediol, de propanediol, d'éthylène glycol et de mélanges de ceux-ci ;
(b) de 35 % à 75 % en poids d'un copolyester d'une dureté allant de 32 à 70 sur l'échelle Shore D, dans laquelle le copolyester est un copolymère de diol choisi dans le groupe composé par le butanediol, le propanediol, l'éthylène glycol et des mélanges de ceux-ci, d'un acide organique aliphatique choisi dans le groupe composé par l'acide adipique, l'acide succinique, l'acide glutarique et des mélanges de ceux-ci, et d'acide téréphtalique ;
(c) de 5 % à 40 % en poids d'un plastifiant non-phtalique;
dans laquelle la dureté sur l'échelle Share A et la dureté sur l'échelle Shore D sont mesurées en utilisant la méthode ASTM D2240.

2. Composition selon la revendication 1, dans laquelle le polyesteruréthane thermoplastique est aliphatique, aromatique ou aliphatique et aromatique.

3. Composition selon la revendication 1, dans laquelle le copolyester ayant une dureté allant de 32 à 70 sur l'échelle Shore D est un copolymère de butanediol, d'acide adipique et d'acide téréphtalique.

4. Composition selon la revendication 1, dans laquelle le copolyester comprend de l'acide téréphtalique dans une quantité allant de 15 % à 35 % en poids du copolyester.

5. Composition selon la revendication 1, dans laquelle le copolyester a une dureté allant de 32 à 35 sur l'échelle shore D,

6. Composition selon la revendication 1, dans laquelle le plastifiant est un dibenzoate de dipropylène glycol.

7. Procédé de préparation d'une composition polymère selon une ou plusieurs des revendications 1 à 6, comprenant les étapes suivantes :
(a) mélange dans l'état liquide du polyesteruréthane thermoplastique, du copolyester et du plastifiant dans une extrudeuse à double vis en co-rotation, de façon à obtenir la composition polymère ;
(b) extrusion de la composition polymère ; et
(c) refroidissement de la composition polymère extrudée.

8. Procédé selon la revendication 7, comprenant en outre l'étape de ;
(d) réduction de la composition polymère sous la forme de granulés,

9. Procédé selon la revendication 7, comprenant en outre une étape préliminaire à l'étape (a) pour préparer le polyesteruréthane thermoplastique en mélangeant dans l'extrudeuse le polyester et l'allongeur de chaîne avec l'Isocyanate dans un rapport inférieur à 8:2 et éventuellement avec un agent de réticulation.

10. Utilisation de la composition polymère selon une ou plusieurs des revendications 1 à 6, pour la production de chaussures de sport, de chaussures de ski et de semelles moulées.

11. Utilisatian selon la revendication 10, dans laquelle les semelles sont compactes ou expansées.

12. Utilisation selon les revendications 10 ou 11, dans laquelle les semelles sont préparées au moyen d'une technique de moulage sélectionnée dans le groupe composé du moulage par injection, du moulage par intrusion et d'une combinaison de ceux-ci.

13. Utilisation de la composition selon une ou plusieurs des revendications 1 à 6 pour le surmoulage des parties rigides.

14. Utilisation de la composition selon une ou plusieurs des revendications 1 à 6 pour la production d'articles moulés par injection et de profils obtenus par extrusion.
